# FASCICULE DE BREVET EUROPEEN

(11) **EP 3 272 966 B1**
(45) Date de publication et mention de la délivrance du brevet: **08.05.2024**
(21) Numéro de dépôt: 16315006.3
(22) Date de dépôt: 20.07.2016
(51) Int. Cl.: F16L 5/14, H02G 3/08, E04G 15/06

(54) **BOÎTE DE RACCORDEMENT**
VERTEILERKASTEN
JUNCTION BOX

(43) Date de publication de la demande: 24.01.2018
(73) Titulaire: Blot, Philippe, 76690 Frichemesnil (FR)
(72) Inventeur: Blot, Philippe, 76690 Frichemesnil (FR)
(74) Mandataire: Cabinet Célanie

(56) Documents cités:
- DE-A1- 3 302 629
- FR-A1- 2 789 711
- US-A- 4 925 045
- US-A- 5 332 114
- US-B1- 6 264 056
- US-B1- 7 836 645

## Description

Le secteur technique de la présente invention est celui de la construction d'immeubles et plus particulièrement la mise en place des systèmes ou accessoires utilisés pour l'installation de réseaux tels que les réseaux d'alimentation en eau, les réseaux d'évacuation des eaux usées ou les réseaux électriques.

Lors de la construction des immeubles, on prévoit des boîtes de raccordement noyées dans le béton pour délimiter des espaces protégés dans lesquels débouchent des tuyaux, des gaines ou des câbles en vue de leur future utilisation. Ces espaces seront accessibles par la suite pour effectuer des raccordements. Des boîtes de raccordement sont par exemple prévues dans les pièces nécessitant une alimentation en eau. Les boîtes de raccordement peuvent être utilisées par exemple pour des appareils sanitaires ou des appareils de chauffage.

La demande FR-2997431 enseigne une boîte de raccordement moulée d'un seul bloc pouvant être empilée avec d'autres boîtes de raccordement identiques. Cette boîte présente cependant une structure complexe nécessitant des efforts d'investissement important pour la fabrication de son moule.

Le but de la présente invention est de pallier les inconvénients de l'art antérieur en fournissant une boîte de raccordement nécessitant un investissement moindre. Cet objectif et d'autres sont réalisés par une boîte de raccordement selon la revendication 1.

L'invention a ainsi pour objet une boîte de raccordement comprenant au moins un couvercle, un fond et des parois latérales comprenant des opercules, caractérisée en ce qu'elle se présente sous la forme d'une demi-boîte supérieure assemblée avec une demi-boîte inférieure, la demi-boîte supérieure et la demi-boîte inférieure comprenant des moyens d'assemblage, la demi-boîte supérieure et la demi-boîte inférieure étant chacune moulée d'un seul bloc, la demi-boîte supérieure et respectivement inférieure comprenant le couvercle ou respectivement le fond fixé à des demi-parois latérales, les demi-parois latérales de la demi-boîte supérieure et respectivement de la demi-boîte inférieure étant par ailleurs fixées entré elles deux à deux.

Selon une particularité de l'invention, la demi-boîte supérieure et la demi-boîte inférieure sont identiques l'une à l'autre et sont issues d'un même moule.

Selon l'invention, les moyens d'assemblage comprennent au moins une paroi périphérique s'étendant transversalement et dans le prolongement des demi-parois latérales de chaque demi-boîte inférieure ou respectivement supérieure, à l'opposé du couvercle ou respectivement du fond.

Selon l'invention, les moyens d'assemblage comprennent des crochets saillants reliés à chaque paroi périphérique et/ou des ouvertures réalisées dans chaque paroi périphérique, les crochets ou respectivement les ouvertures de la demi-boîte supérieure étant destinés à coopérer avec les ouvertures ou respectivement les crochets de la demi-boîte inférieure.

Selon l'invention, chaque crochet comprend une branche frontale prolongée par deux branches latérales présentant chacune un cran de blocage, la branche frontale étant reliée par une branche centrale à la paroi périphérique.

Selon une autre particularité de l'invention, les moyens d'assemblage comprennent des broches de guidage saillantes reliées à la paroi périphérique et/ou des logements réalisés dans la paroi périphérique, les broches ou respectivement les logements de la demi-boîte supérieure étant destinés à coopérer avec les logements ou respectivement les broches de la demi-boîte inférieure.

Selon une autre particularité de l'invention, le fond de la demi-boîte inférieure et respectivement le couvercle de la demi-boîte supérieure comprend des plots tubulaires de hauteur déterminée s'étendant vers l'intérieur de la boîte pour délimiter un espacement entre deux demi-boîtes inférieures ou respectivement supérieures empilées l'une sur l'autre.

Selon une autre particularité de l'invention, ladite demi-boîte inférieure et respectivement supérieure comprend quatre demi-parois latérales dont trois demi-parois sont équipées d'une pluralité d'opercules et une demi-paroi restante est dépourvue d'opercule.

Selon une autre particularité de l'invention, les opercules sur une même demi-paroi latérale sont séparés l'un de l'autre par au moins une nervure de renfort et sont séparés d'une arête de jonction avec le fond ou respectivement le couvercle par au moins une rainure d'assouplissement.

Selon une autre particularité de l'invention, ladite arête comprend des encoches disposées en regard desdites nervures de renfort séparant lesdits opercules.

Un tout premier avantage est que le moule pour la fabrication de chaque demi-boîte ne nécessite plus l'aménagement de zone d'articulation entre des parois. L'investissement pour la fabrication du moule est ainsi réduit. Cet investissement est d'autant plus réduit qu'un même moule peut être utilisé pour fabriquer les deux moitiés d'une boîte.

Un autre avantage de la présente invention vient encore du fait que la boîte peut être réalisée à partir de deux demi-boîtes identiques ce qui facilite la logistique. Ainsi, on ne livre pas un stock de fonds et un stock de couvercles mais un stock de demi-boîtes. Les pertes dues aux erreurs ou aux accidents sont également avantageusement réduites.

Un autre avantage de la présente invention est que les demi-boîtes peuvent être empilées pour leur transport. Une palette comprenant environ 700 demi-boîtes pourra par exemple être livrée sur un chantier.

Un avantage encore est que la boîte peut être fermée aisément et présente alors une résistance mécanique importante lui permettant de conserver son intégrité.

Un avantage de l'invention est aussi que la boîte, dont le couvercle est retiré pour accéder à l'espace de raccordement, reste ensuite intégrée dans la dalle. On facilite ainsi son usage et on limite la quantité de déchets par exemple par rapport aux boîtes en carton. En outre les prédécoupes dans la partie supérieure de la boîte, dépassant au-dessus de la dalle, permettent de retirer cette partie supérieure de façon nette. La partie supérieure est par exemple cassée ou découpée.

Un avantage de l'invention est encore que la boîte de raccordement peut être maintenue aisément, par exemple par des fils métalliques, grâce aux encoches réalisées sur les arêtes.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue en perspective d'une demi-boîte ;
- la figure 2 représente une vue de face d'un crochet clipsable;
- la figure 3 représente un détail montrant l'assemblage par les crochets clipsés;
- la figure 4 représente une vue en perspective montrant le positionnement de deux demi-boîtes à l'aide des broches de guidage ;
- la figure 5 représente une vue en perspective d'une boîte fermée ; et
- la figure 6 représente une vue en coupe d'un empilement de demi-boîtes.

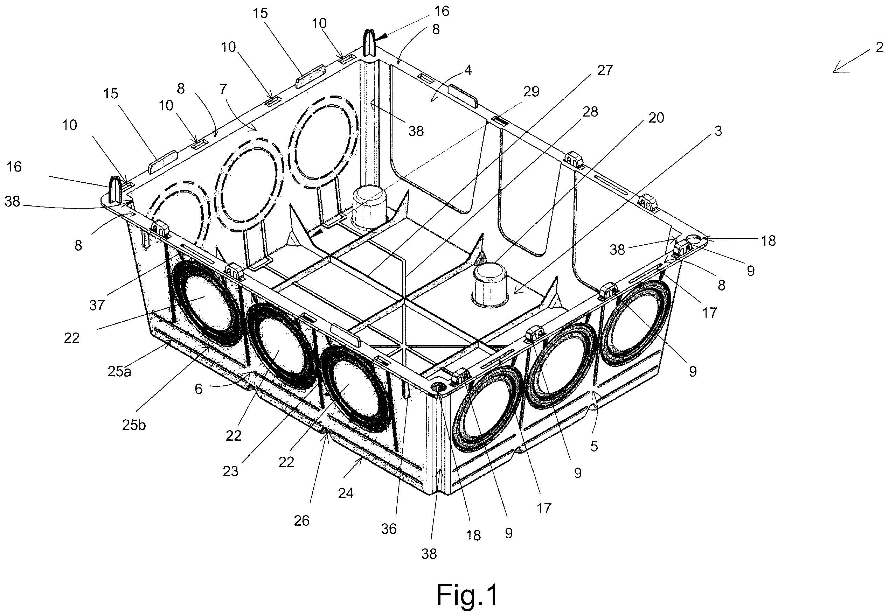

L'invention va à présent être décrite avec davantage de détails. La figure 1 représente une vue en perspective d'une demi-boîte 2. La demi-boîte 2 comprend un fond 3 fixé à des demi-parois latérales 4, 5, 6 et 7. Les demi-parois latérales 4-7 sont par ailleurs fixées entre elles deux à deux. La demi-boîte 2 forme ainsi une pièce moulée d'un seul bloc rigide ou semi-rigide.

La demi-boîte, par exemple inférieure, comprend ici quatre demi-parois latérales pour former, avec une demi-boîte complémentaire, par exemple supérieure, une boîte comprenant quatre parois latérales.

On parle ici de fond 3 de la demi-boîte 2, mais ce fond 3 peut aussi constituer un couvercle de la boîte. Une demi-boîte supérieure peut être structurellement identique à la demi-boîte inférieure à laquelle elle est associée. Les deux demi-boîtes supérieure et inférieure peuvent même être strictement identiques et issues d'un même moule.

Le matériau plastique utilisé pour le moulage permet des déformations élastiques des demi-parois 4-7 et du fond 3 liés rigidement entre eux.

Le fond comprend sur sa face interne des nervures 27 et des rainures 28. Les nervures 27 forment un quadrillage et se terminent par des renforts triangulaires 29 joignant le fond 3 et les demi-parois latérales 4-7. Ces renforts triangulaires 29 sont disposés transversalement au fond 3 et transversalement à une des demi-parois latérales.

Les rainures 28 s'étendent chacune en diagonale par rapport aux nervures ou parallèlement à une des nervures.

Une rainure 28 peut être disposée entre deux nervures délimitant entre elles une aire faisant face à un opercule 22. Cette rainure se scinde en deux rainures pour former un T à proximité d'une demi-paroi latérale. Les deux branches du T se prolongent ensuite vers cette demi-paroi latérale et remontent jusqu'à un opercule disposé sur cette demi-paroi latérale. Chaque opercule est par exemple disposé en face d'une aire délimitée par une ou deux nervures. Chaque opercule est par exemple joint à deux rainures sur la face interne de la demi-paroi latérale. Ces deux rainures rejoignent par exemple chacune le fond et se prolongent sur le fond par deux autres rainures joignant deux rainures formant les deux branches d'un T. Le pied de ce T est par exemple formé par une rainure s'étendant parallèlement à une nervure.

Les arêtes 24 de jonction entre le fond 3 et chaque demi-paroi latérale 4, 5, 6 et 7 comprennent des encoches 26. Ces encoches apportent également de la robustesse à la demi-boîte. Ces encoches 26 sont disposées en regard de nervures 23 de renfort disposées sur une face externe des demi-parois latérales et séparant les opercules 22. Ces encoches 26 disposées régulièrement sur toute la périphérie des faces supérieure et inférieure de la boîte constituent des passages de blocage en position pour des fils de fixation de la boîte. La boîte est fixée par exemple par des fils de fer sur une grille avant le coulage d'une dalle.

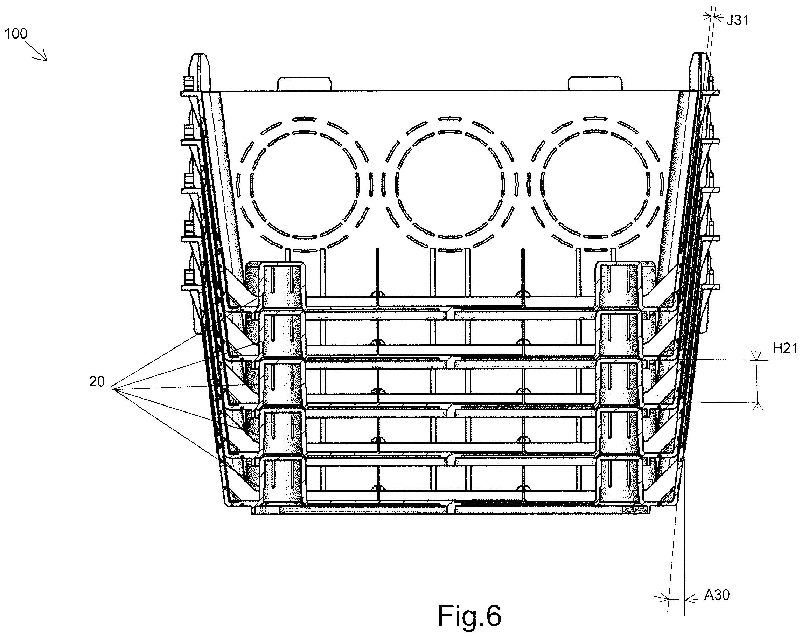

Le fond 3 comprend également des plots tubulaires 20 permettant d'empiler les demi-boîtes sans les bloquer. Un exemple d'empilement sera décrit ultérieurement en relation avec la figure 6.

Chacune des trois demi-parois latérales 5, 6 et 7 comprend une pluralité d'opercules. Sur chacune de ces demi-parois latérales sont disposés trois opercules 22. Le nombre d'opercules n'est pas limitatif. Chaque opercule comprend au moins une rainure circulaire dans laquelle un jour discontinu est réalisé. Le jour discontinu forme ici des pointillés.

Chaque opercule comprend par exemple deux rainures circulaires concentriques dans chacune desquelles un jour discontinu est réalisé. Ainsi, deux perçages de deux diamètres différents peuvent être envisagés.

Les opercules 22 sont chacun encadrés de part et d'autre par deux nervures 23 de renfort disposées sur la face externe des demi-parois latérales. Par ailleurs, deux rainures d'assouplissement 25a et 25b sont disposées parallèlement sur cette face externe, -entre chaque opercule et l'arête 24 reliant le fond et cette demi-paroi latérale.

Des arêtes concaves 38 joignent les demi-parois latérales deux à deux. Cette inversion de courbure, par rapport aux demi-parois latérales jointes entre elles, augmente encore la résistance mécanique de la demi-boîte.

La demi-paroi latérale 4 est dépourvue d'opercules. Cette demi-paroi latérale comprend des zones de surépaisseur. Une zone plus épaisse s'étend le long du fond 3. Deux zones plus épaisses sont disposées le long des bords de jonction avec les deux demi-parois latérales adjacentes 5 et 7. Deux zones médianes plus épaisses s'étendant entre le fond et le bord opposé au fond.

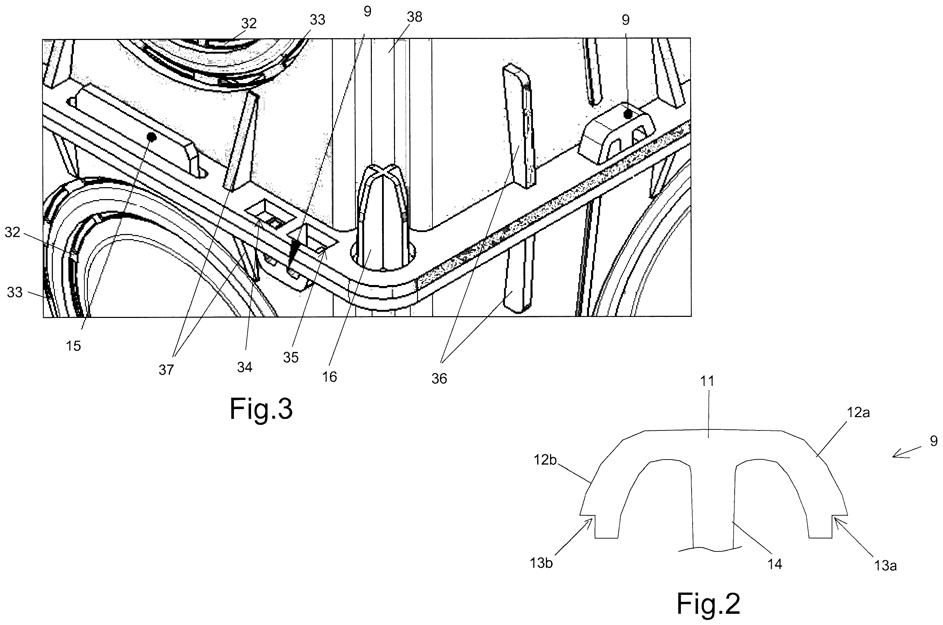

Le bord de la demi-boîte, à l'opposé du fond 3, se présente sous la forme d'une paroi périphérique 8 s'étendant transversalement aux demi-parois latérales. La paroi périphérique 8 est parallèle au fond 3. La paroi périphérique 8 s'étend vers l'extérieure de la boîte. Les demi-parois latérales 4-7 comprennent des renforts triangulaires 37 ou rectangulaires 38 soutenant la paroi périphérique 8. Ces renforts sont représentés plus en détail à la figure 3.

Deux parois périphériques 8 de deux demi-boîtes peuvent être assemblées l'une à l'autre par les moyens d'assemblage. Les moyens d'assemblage, non selon l'invention, peuvent se présenter sous la forme de colle ou d'agrafes ou sous la forme d'éléments directement obtenus par moulage comme décrit par la suite. La paroi périphérique 8 est par exemple prolongée par des crochets saillants 9 destinés à coopérer avec des ouvertures 10 d'une demi-boîte complémentaire.

La paroi périphérique 8 peut également comprendre des ouvertures 10 destinées à coopérer avec des crochets saillants 9 d'une demi-boîte complémentaire.

La demi-boîte comprend ici sur le bord de sa demi-paroi latérale 7 deux paires d'ouvertures 10 disposées en regard de deux paires de crochets 9 sur le bord de la demi-paroi latérale 5 opposée. Deux demi-boîtes retournées l'une sur l'autre peuvent ainsi coopérer pour la fermeture.

Chaque demi-boîte comprend sur le bord de sa demi-paroi latérale 6 ou 4, une paire d'ouvertures 10 disposée de façon symétrique par rapport à une paire de crochets saillants 9. Deux demi-boîtes retournées l'une sur l'autre peuvent ainsi coopérer pour la fermeture.

La paroi périphérique 8 est prolongée également par des broches de guidage, en croisillon 16 ou sous la forme de lamelles 15, destinées à coopérer avec des logements 18 ou 17 d'une demi-boîte complémentaire.

La paroi périphérique 8 peut aussi comprendre des logements 18 ou 17 destinés à coopérer avec des broches 16 ou 15 de guidage d'une demi-boîte complémentaire.

Des logements 18 circulaires sont prévues pour des broches de guidage en croisillon. Des logements 17 rectangulaires sont prévus pour des broches de guidage sous forme de lamelles.

La demi-boîte 2 comprend ici sur le bord de sa demi-paroi latérale 7 des broches de guidages 15 se présentant sous la forme de lamelles disposées en regard de deux logements 17 rectangulaires sur le bord de la demi-paroi latérale 5 opposée. Deux demi-boîtes retournées l'une sur l'autre peuvent ainsi coopérer pour la fermeture.

La demi-boîte comprend sur le bord de sa demi-paroi latérale 6 ou 4, une broche de guidage sous la forme d'une lamelle et une ouverture rectangulaire disposées symétriquement l'une par rapport à l'autre. Deux demi-boîtes retournées l'une sur l'autre peuvent ainsi coopérer pour la fermeture.

La paroi périphérique 8 est prolongée également, de chaque côté de la demi-paroi latérale 7, par une broche de guidage sous la forme d'un croisillon 16. Ces deux croisillons 16 sont disposés en regard de deux logements 17 ronds réalisés dans la paroi périphérique 8 de chaque côté de la demi-paroi latérale 5 opposée. Deux demi-boîtes retournées l'une sur l'autre peuvent ainsi coopérer pour la fermeture.

La figure 2 représente une vue de face d'un crochet clipsable. Le crochet 9 comprend une branche frontale 11 prolongée par deux branches latérales 12a et 12b présentant chacune un cran de blocage 13a et 13b. La branche frontale 11 est reliée par une branche centrale 14 à la paroi périphérique. Le crochet peut ainsi se clipser dans l'épaisseur de la paroi périphérique de la demi-boîte complémentaire. Sa branche frontale 11 passe à travers l'ouverture associée tandis que les branches latérales se plient jusqu'à ce que les crans 13a et 13b viennent au niveau de la paroi périphérique. Les branches latérales se déplient alors pour empêcher un mouvement de retour.

La figure 3 représente un détail montrant notamment l'assemblage des crochets 9 dans leur ouverture. Vu de dessous, il apparaît que la branche centrale 14 est disposée entre deux passages 34 et 35. Ces passages 34 et 35 d'une part facilitent le moulage et d'autre part augmentent la souplesse de la branche centrale 14.

Les broches de guidage sont également représentées dans leur logement. La broche 16 en croisillon étant de plus grande longueur que la broche 15 en lamelle, un premier guidage est réalisé par les croisillons 16 puis un guidage plus précis est réalisé lors du guidage complémentaire par les lamelles 15. Une lamelle ou un logement pour une lamelle est par exemple disposé systématiquement entre deux crochets ou entre deux ouvertures pour des crochets.

En position fermée, la broche en croisillon 16 longe la portion concave 38 reliant deux demi-parois latérales.

Les renforts triangulaires 37 des deux demi-boîtes viennent ici en vis-à-vis. Les renforts rectangulaires 36 viennent également en vis-à-vis. Ces renforts s'étendent transversalement à la paroi périphérique et transversalement à une demi-paroi latérale.

On peut voir également plus en détail une partie des deux rainures périphériques 32 et 33 concentriques des opercules.

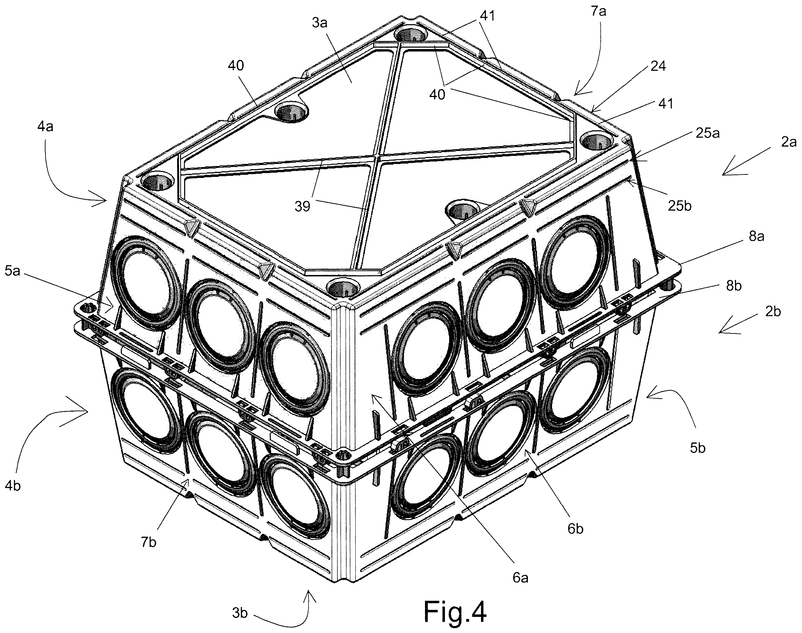

La figure 4 représente une vue en perspective montrant le positionnement de deux demi-boîtes à l'aide des croisillons 16 de guidage.

Une demi-boîte 2b réalise le fond 3b tandis qu'une autre demi-boîte 2a réalise le couvercle. Le fond 3a de la demi-boîte supérieure constituera le couvercle de la boîte.

De manière non limitative, les deux demi-boîtes sont identiques et issues d'un même moulage. Comme représenté à la figure 4, le fond 3a comprend sur sa face externe des nervures périphériques 40 et deux nervures 39 en diagonales rejoignant ces nervures périphériques 40. Des rainures 41 d'assouplissement sont disposées entre les arêtes 24 et les nervures périphériques 40. Ces rainures 41 disposées sur toute la périphérie de la face supérieure du couvercle constituent également des prédécoupes permettant de retirer nettement la face supérieure de la boîte. Cette face supérieure, destinée à être cassée ou découpée, peut être prévue pour dépasser au-dessus de la dalle. Des rainures 25a et 25b constituant des prédécoupes peuvent également être prévues en partie supérieure des parois latérales, sur toute la périphérie de la boîte.

Les deux demi-boîtes 2a et 2b vont être assemblées en joignant leur paroi périphérique 8a et 8b en appui l'une contre l'autre. Les crochets et les broches de guidage permettent la fermeture de la boîte. Chaque paroi latérale sera formée par deux demi-parois latérales 4a et 4b, 6a et 6b, 7a et 5b ou 5a et 7b.

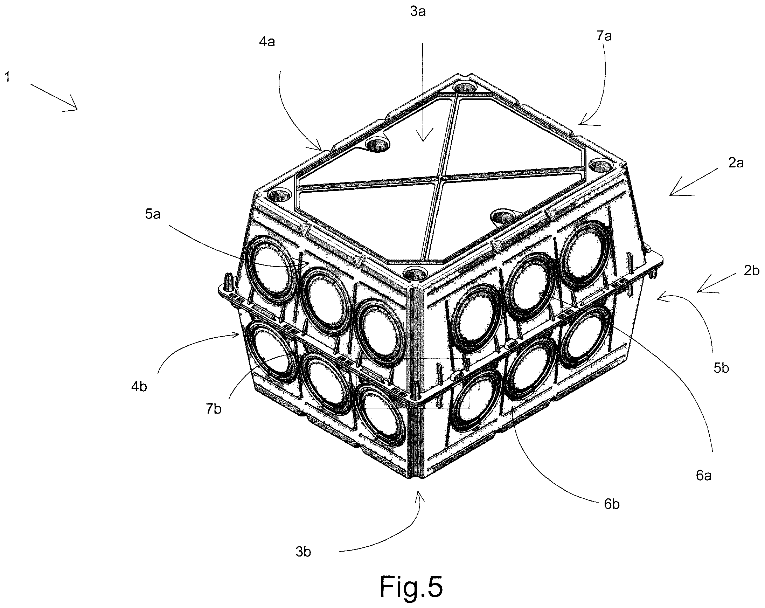

La figure 5 représente une vue en perspective d'une boîte fermée. Les crochets sont clipsés dans les ouvertures correspondantes de la demi-boîte opposée.

Les deux demi-parois latérales 4a et 4b constituent une première paroi latérale de la boîte 1. Les deux demi-parois latérales 6a et 6b constituent une deuxième paroi latérale de la boîte 1. Les deux demi-parois latérales 5a et 7b constituent une troisième paroi latérale de la boîte 1. Les deux demi-parois latérales 7a et 5b constituent une quatrième paroi latérale de la boîte 1. Le fond 3b de la demi-boîte inférieure 2b constitue le fond de la boîte 1 tandis que le fond 3a de la demi-boîte supérieure 2a constitue le couvercle de la boîte 1.

La figure 6 représente une vue en coupe d'un empilement 100 de demi-boîtes. Dans chaque demi-boîte, les demi-parois latérales présentent un angle déterminé A30 par rapport au fond. Cet angle A30 permet d'insérer une demi-boîte dans une autre. L'angle A30 est par exemple compris entre 2 degrés et 10 degrés. Chaque demi-boîte est ainsi évasée.

Par ailleurs, le fond de la demi-boîte comprend des plots tubulaires 20 de hauteur déterminée s'étendant vers l'intérieur de la boîte pour délimiter un espacement H21 entre deux demi-boîtes empilées l'une sur l'autre.

Ainsi, on peut conserver un jeu J31 entre deux demi-parois latérales de deux demi-boîtes empilées l'une dans l'autre. Ce décalage H21 en hauteur permet de ne pas endommager les demi-boîtes lors de leur empilement. On ne vient pas forcer par exemple sur les demi-parois latérales. De plus, la structure de la demi-boîte présente à la fois des éléments de rigidification et des éléments d'assouplissement, comme décrit ci-avant, lui permettant d'être suffisamment résistante pour permettre son empilement sans être endommagée.

L'installation de la boîte selon l'invention assure une grande facilité de manipulation. En effet, une demi-boîte est installée et l'utilisateur a un accès total à l'intérieur. Il peut donc sans aucune entrave positionner ses raccords avec les gaines. Ensuite, l'utilisateur n'a plus qu'à disposer la demi-boîte complémentaire afin de refermer l'ensemble avant de procéder au coulage de la dalle. Les opercules de la demi-boîte supérieure peuvent également être utilisés pour y passer des gaines en vue d'un futur raccordement avant le coulage de la dalle.

Il doit être évident pour l'homme du métier que la présente invention permet d'autres variantes de réalisation. Par conséquent, les présents modes de réalisation doivent être considérés comme illustrant l'invention.

## Revendications

1. Boîte de raccordement (1) comprenant au moins un couvercle (3a), un fond (3b) et des parois latérales comprenant des opercules (22), boîte se présentant sous la forme d'une demi-boîte supérieure (2a) assemblée avec une demi-boîte inférieure (2b), la demi-boîte supérieure et la demi-boîte inférieure comprenant des moyens d'assemblage, la demi-boîte supérieure (2a) et la demi-boîte inférieure (2b) étant chacune moulée d'un seul bloc, la demi-boîte supérieure et respectivement inférieure comprenant le couvercle (3a) ou respectivement le fond (3b) fixé à des demi-parois latérales (4a, 5a, 6a, 7a, 4b, 5b, 6b, 7b), les demi-parois latérales de la demi-boîte supérieure (2a) et respectivement de la demi-boîte inférieure (2b) étant par ailleurs fixées entre elles deux à deux, **caractérisée en ce que** les moyens d'assemblage comprennent :
- au moins une paroi périphérique (8) s'étendant transversalement et dans le prolongement des demi-parois latérales (4, 5, 6, 7) de chaque demi-boîte inférieure ou respectivement supérieure, à l'opposé du couvercle ou respectivement du fond, et
- des crochets saillants (9) reliés à chaque paroi périphérique (8) et/ou des ouvertures (10) réalisées dans chaque paroi périphérique (8), les crochets (9) ou respectivement les ouvertures (10) de la demi-boîte supérieure étant destinés à coopérer avec les ouvertures (10) ou respectivement les crochets (9) de la demi-boîte inférieure, chaque crochet (9) comprenant une branche frontale (11) prolongée par deux branches latérales (12a, 12b) présentant chacune un cran de blocage (13a, 13b), la branche frontale (11) étant reliée par une branche centrale (14) à la paroi périphérique (8).

2. Boîte de raccordement (1) selon la revendication 1, **caractérisée en ce que** la demi-boîte supérieure (2a) et la demi-boîte inférieure (2b) sont identiques l'une à l'autre et sont issues d'un même moule.

3. Boîte de raccordement (1) selon l'une des revendications 1 ou 2, **caractérisée en ce que** les moyens d'assemblage comprennent des broches (15 ou 16) de guidage saillantes reliés à la paroi périphérique (8) et/ou des logements (17 ou 18) réalisés dans la paroi périphérique (8), les broches (15 ou 16) ou respectivement les logements (17 ou 18) de la demi-boîte supérieure étant destinés à coopérer avec les logements (17 ou 18) ou respectivement les broches (15 ou 16) de la demi-boîte inférieure.

4. Boîte de raccordement (1) selon l'une quelconque des revendications précédentes, **caractérisée en ce que** le fond de la demi-boîte inférieure et respectivement le couvercle de la demi-boîte supérieure comprend des plots tubulaires (20) de hauteur déterminée s'étendant vers l'intérieur de la boîte pour délimiter un espacement (H21) entre deux demi-boîtes inférieures ou respectivement supérieures empilées l'une sur l'autre.

5. Boîte de raccordement (1) selon l'une des revendications 1 à 4, **caractérisée en ce que** ladite demi-boîte inférieure et respectivement supérieure comprend quatre demi-parois latérales (4, 5, 6, 7) dont trois demi-parois (5, 6, 7) sont équipées d'une pluralité d'opercules (22) et une demi-paroi restante est dépourvue d'opercule.

6. Boîte de raccordement (1) selon l'une des revendications 1 à 5, **caractérisée en ce que** les opercules (22) sur une même demi-paroi latérale sont séparés l'un de l'autre par au moins une nervure (23) de renfort et sont séparés d'une arête (24) de jonction avec le fond ou respectivement le couvercle par au moins une rainure (25a, 25b) d'assouplissement.

7. Boîte de raccordement (1) selon la revendication 6, **caractérisée en ce que** ladite arête (24) comprend des encoches (26) disposées en regard desdites nervures (23) de renfort séparant lesdits opercules (22).

## Patentansprüche

1. Verteilerkasten (1), der mindestens einen Deckel (3a), einen Boden (3b) und Seitenwänden mit Abdeckungen (22) umfasst, wobei der Kasten in Form einer oberen Kastenhälfte (2a) vorliegt, der mit einer unteren Kastenhälfte (2b) zusammenmontiert ist, wobei die obere Kastenhälfte und die untere Kastenhälfte Montagemittel umfassen, wobei die obere Kastenhälfte (2a) und die untere Kastenhälfte (2b) jeweils aus einem einzigen Block geformt sind, wobei die obere bzw. die untere Kastenhälfte den Deckel (3a) bzw. den Boden (3b) umfasst, der an den seitlichen Halbwänden (4a, 5a, 6a, 7a, 4b, 5b, 6b, 7b) befestigt ist, wobei die seitlichen Halbwände der oberen Kastenhälfte (2a) bzw. der unteren Kastenhälfte (2b) außerdem paarweise aneinander befestigt sind, **dadurch gekennzeichnet, dass** die Montagemittel Folgendes umfassen:
- mindestens eine Umfangswand (8), die sich quer und in Verlängerung der seitlichen Halbwände (4, 5, 6, 7) jeder unteren bzw. oberen Kastenhälfte, gegenüber dem Deckel bzw. Boden, erstreckt, und
- vorstehende Haken (9), die mit jeder Umfangswand (8) und/oder Öffnungen (10), die in jeder Umfangswand (8) hergestellt sind, verbunden sind, wobei die Haken (9) bzw. die Öffnungen (10) der oberen Kastenhälfte dazu bestimmt sind, mit den Öffnungen (10) bzw. den Haken (9) der unteren Kastenhälfte zusammenzuwirken, wobei jeder Haken (9) einen vorderen Schenkel (11) umfasst, der durch zwei seitliche Schenkel (12a, 12b) verlängert ist, die jeweils eine Verriegelungskerbe (13a, 13b) aufweisen, wobei der vordere Schenkel (11) über einen mittleren Schenkel (14) mit der Umfangswand (8) verbunden ist.

2. Verteilerkasten (1) nach Anspruch 1, **dadurch gekennzeichnet, dass** die obere Kastenhälfte (2a) und die untere Kastenhälfte (2b) miteinander identisch sind und aus derselben Form stammen.

3. Verteilerkasten (1) nach einem der Ansprüche 1 oder 2, **dadurch gekennzeichnet, dass** die Montagemittel vorstehende Führungsstifte (15 oder 16), die mit der Umfangswand (8) verbunden sind, und/oder Aufnahmen (17 oder 18), die in der Umfangswand (8) hergestellt sind, umfassen, wobei die Stifte (15 oder 16) bzw. die Aufnahmen (17 oder 18) der oberen Kastenhälfte dazu bestimmt sind, mit den Aufnahmen (17 oder 18) bzw. den Stiften (15 oder 16) der unteren Kastenhälfte zusammenzuwirken.

4. Verteilerkasten (1) nach einem der vorhergehenden Ansprüche, **dadurch gekennzeichnet, dass** der Boden der unteren Kastenhälfte bzw. der Deckel der oberen Kastenhälfte röhrenförmige Stelzlager (20) mit einer bestimmten Höhe umfasst, die sich in das Innere des Kastens erstrecken, um einen Zwischenraum (H21) zwischen zwei unteren bzw. oberen Kastenhälften zu begrenzen, die übereinander gestapelt sind.

5. Verteilerkasten (1) nach einem der Ansprüche 1 bis 4, **dadurch gekennzeichnet, dass** die untere bzw. die obere Kastenhälfte vier seitliche Halbwände (4, 5, 6, 7) umfasst, von denen drei Halbwände (5, 6, 7) mit einer Vielzahl von Abdeckungen (22) ausgestattet sind und eine verbleibende Halbwand keine Abdeckungen aufweist.

6. Verteilerkasten (1) nach einem der Ansprüche 1 bis 5, **dadurch gekennzeichnet, dass** die Abdeckungen (22) auf derselben seitlichen Halbwand durch mindestens eine Verstärkungsrippe (23) voneinander getrennt und von einer Verbindungskante (24) mit dem Boden bzw. dem Deckel durch mindestens eine Lockerungsnut (25a, 25b) getrennt sind.

7. Verteilerkasten (1) nach Anspruch 6, **dadurch gekennzeichnet, dass** die Kante (24) Schlitze (26) umfasst, die gegenüber den Verstärkungsrippen (23) angeordnet sind, die die Abdeckungen (22) trennen.

## Claims

1. A connection box (1) comprising at least one cover (3a), a bottom (3b) and side walls comprising lids (22), a box in the form of an upper half-box (2a) assembled with a lower half-box (2b), the upper half-box and the lower half-box comprising assembly means, the upper half-box (2a) and the lower half-box (2b) each being moulded in one piece, the upper and respectively lower half-boxes comprising the cover (3a) or respectively the bottom (3b) fastened to half side walls (4a, 5a, 6a, 7a, 4b, 5b, 6b, 7b), the half side walls of the upper half box (2a) and respectively of the lower half box (2b) being moreover fastened to each other two by two, **characterised in that** the assembly means comprise:
- at least one peripheral wall (8) extending transversely and in the extension of the half side walls (4, 5, 6, 7) of each lower or respectively upper half-box, opposite to the cover or respectively to the bottom, and
- protruding hooks (9) connected to each peripheral wall (8) and/or openings (10) made in each peripheral wall (8), the hooks (9) or respectively the openings (10) of the upper half-box being intended to cooperate with the openings (10) or respectively the hooks (9) of the lower half-box, each hook (9) comprising a front branch (11) extended by two lateral branches (12a, 12b) each having a blocking notch (13a, 13b), the front branch (11) being connected by a central branch (14) to the peripheral wall (8).

2. The connection box (1) according to claim 1, **characterised in that** the upper half-box (2a) and the lower half-box (2b) are identical to each other and originate from the same mould.

3. The connection box (1) according to one of claims 1 or 2, **characterised in that** the assembly means comprise protruding guide pins (15 or 16) connected to the peripheral wall (8) and/or housings (17 or 18) made in the peripheral wall (8), the pins (15 or 16) or respectively the housings (17 or 18) of the upper half-box being intended to cooperate with the housings (17 or 18) or respectively the pins (15 or 16) of the lower half-box.

4. The connection box (1) according to any one of the preceding claims, **characterised in that** the bottom of the lower half-box and respectively the cover of the upper half-box comprises tubular studs (20) of determined height extending towards the inside of the box to delimit a spacing (H21) between two lower or respectively upper half-boxes which are stacked on top of each other.

5. The connection box (1) according to one of claims 1 to 4, **characterised in that** said lower and respectively upper half-box comprises four half side walls (4, 5, 6, 7) of which three half-walls (5, 6, 7) are equipped with a plurality of lids (22) and a remaining half-wall is devoid of lid.

6. The connection box (1) according to one of claims 1 to 5, **characterised in that** the lids (22) on the same half side wall are separated from each other by at least one reinforcing rib (23) and are separated from an edge (24) of junction with the bottom or respectively the cover by at least one softening groove (25a, 25b).

7. The connection box (1) according to claim 6, **characterised in that** said edge (24) comprises notches (26) which are disposed opposite to said reinforcing ribs (23) separating said lids (22).
